Europäisches Patentamt

European Patent Office

Office européen des brevets

(11) Publication number: **0 288 745**
**A2**

(12) # EUROPEAN PATENT APPLICATION

(21) Application number: 88104723.7

(22) Date of filing: 24.03.88

(51) Int. Cl.⁴: **G21C 13/02**

(30) Priority: 30.03.87 SE 8701310

(43) Date of publication of application:
02.11.88 Bulletin 88/44

(84) Designated Contracting States:
CH DE IT LI

(71) Applicant: **AB ASEA-ATOM**

S-721 04 Västeras(SE)

(72) Inventor: **Jönsson, Erik**
**Förvaltargatan 10**
**S-724 66 Västeras(SE)**
Inventor: **Törnblom, Lars**
**Vetterstorpsgatan 20**
**S-724 62 Västeras(SE)**

(74) Representative: **Boecker, Joachim, Dr.-Ing.**
**Rathenauplatz 2-8**
**D-6000 Frankfurt a.M. 1(DE)**

(54) **Sealing device.**

(57) The invention relates to a sealing device for sealing a leak inside a reactor pressure vessel in which the output of the reactor is controlled by means of control rods (2). The control rods are operated by means of control rod drives which are connected to the control rod by means of rods (3) positioned in tubes (4) extending through openings (5) in the reactor wall (1). Around each tube (4), on the inside of the wall (1), there is arranged a stub tube (6) which communicates with said opening (5) and one end of which is joined to the tube (4) by means of a weld (8). To prevent leakages from a possible crack 9 which may easily occur close to the weld (8) and may develop into a leak, an inner sealing sleeve (10) of a soft metallic material and with an outer conical surface is fitted over the tube (4) and the stub tube (6), and an outer sealing sleeve (12) of a hard metallic material and with an inner conical surface is fitted over the inner sealing sleeve (10). On each side of the crack (9) special contact surfaces are formed between the inner sealing sleeve (10) and the tube (4) or the CRD stub tube (6). As the outer sealing sleeve (12) is pressed in over the inner sealing sleeve (10), the latter is pressed by the conical surfaces, moving against each other, against the tube (4) and the stub tube (6), thus providing sealing at the contact surfaces.

FIG. 2

## Sealing device for nuclear power reactor

The invention relates to a sealing device according to the precharacterising part of Claim 1.

The output power from a nuclear power reactor is controlled by inserting so-called control rods to a greater or smaller extent into the core enclosed within the reactor pressure vessel. The positions of the control rods are controlled by operating rods which have been arranged in long tubes. These tubes extend through an associated opening in the wall of the vessel. Around each tube, on the inside of the vessel, there is arranged a supporting sleeve, each supporting sleeve communicating with said associated opening and being sealed thereto by means of a weld securing the supporting sleeve to the vessel wall. At its other end the supporting sleeve is sealed against the tube by means of a weld around the tube. In some cases, in connection with older boiling water reactors, these supporting sleeves, or - as they are also called - control rod drive stub tubes (hereinafter abbreviated CRD stub tubes), have cracked. These cracks tend to occur in the zone which is subjected to heat at the weld between the tube and the CRD stub tube.

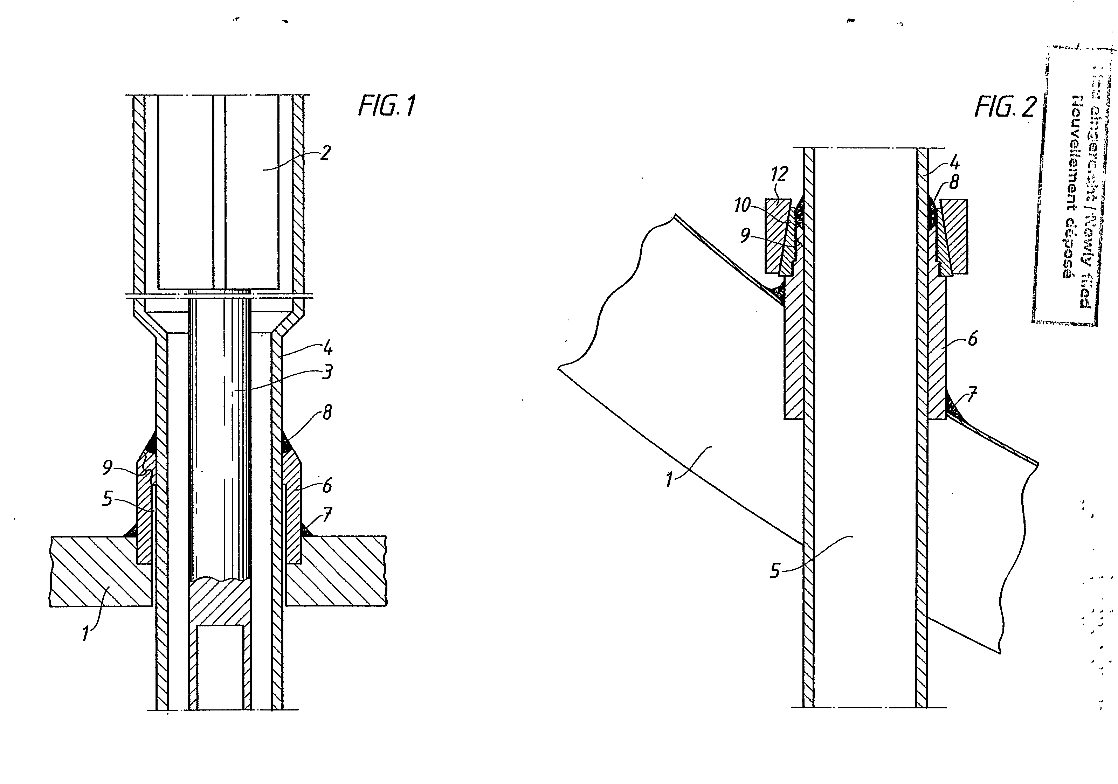

Figure 1 shows a prior art device. In the figure, 1 designates the wall of a reactor pressure vessel and 2 designates one of many control rods. The axial position of the control rod 2 is controlled by an operating rod 3 which travels in a tube 4. This tube 4 extends through an opening 5 in the wall 1 of the vessel, and around the tube 4 a CRD stub tube 6 is arranged. The CRD stub tube 6 is sealed against the wall 1 of the vessel by means of a weld 7 and against the tube 4 by a weld 8. The vessel consists of carbon steel with an internal stainless coating. The CRD stub tube 6 is of a stainless material. If a crack 9 should arise as indicated in Figure 1, it is self-evident that water may leak out from the interior of the reactor vessel into the gap (5) between the tube 4 on the one hand and the stub tube 6 and the reactor wall 1 respectively, on the other hand. Attempts have been made to provide a seal by rolling out the tube 4 against the wall 1 of the vessel. After some time under operation, however, a new leakage has arisen. In other cases, a seal in the form of a stuffing box with graphite tape sealing agent has been used. Not even such a seal is quite satisfactory, among other things due to the fact that it does not significantly contribute to mechanically support the region around the crack which can thus continue to expand.

The invention aims at a sealing device of the above-mentioned kind, which eliminates the above-mentioned deficiencies and entails, inter alia, that incipient cracks, which have not yet started leaking, are prevented to grow further.

To achieve this aim the invention suggests a sealing device according to the introductory part of Claim 1, which is characterized by the features of the characterizing part of Claim 1.

Further developments of the invention are characterized by the features of the additional claims.

With a sealing device according to the invention a stable sealing and supporting of a leak or crack in the tube or the CRD stub tube is obtained.

The conical surfaces on the sealing sleeves are dimensioned so as to obtain self-locking. As additional security, the inner sleeve may be provided with an outer locking nut. The sealing will become really effective if the inner wall of the sleeve is provided at its ends with grooves or ridges around its circumference. It will then be easier to impart to these grooves or ridges a higher contact pressure against the underlying surface. A corresponding increase of the sealing pressure can be brought about by suitable machining of the tube or the outer surface of the CRD stub tube by means of, for example, turning. The outer surface of the CRD stub tube should then be machined so that different diameters on either side of the crack are attained.

Another problem may arise if the sealing device is applied over a crack which has not yet developed into a leak, i.e. is used for a preventive purpose, namely, in that high pressures may be obtained in the space where the crack is located between the inner more slender sleeve and the underlying machined CRD stub tube. The water trapped in this space will increase in volume with rising temperature. To avoid a harmful increase in pressure, a compressible volume, for example in the form of an elastically compressible tube, sealed at its ends, may be arranged as a piston ring around the CRD stub tube.

If the crack is situated in the tube just before the spot where the tube passes into the CRD stub tube, difficulties may arise in sealingly applying the inner sealing sleeve over the crack. This is due to the fact that the outer diameters of the tube and of the CRD stub tube differ considerably. One way of effecting a functioning seal despite these difficulties is to divide the inner sleeve into two parts, one part having a smaller diameter for sealing against the tube, and one part having a larger diameter for sealing against the CRD stub tube, both parts of the sleeve being provided with conical outer surfaces. The outer sealing sleeve is made in one piece but is provided with two inner conical surfaces, separated from each other, such as to fit the respective conical outer surfaces of the two inner sleeve parts.

The necessary force for applying the clamp type joint described is best obtained by means of a hydraulic cylinder. For the double clamp type joint, two hydraulic cylinders are needed.

The sealing device according to the invention is particularly designed for control rod tubes penetrating the wall of a pressure vessels of a nuclear reactor. However, it is, of course, also applicable with pressure vessels in an other technical fields where similar problems prevail as described above.

The invention will now be described in greater detail with reference to Figures 2 to 4 showing - by way of example -two embodiment according to the invention.

In Figure 2, like reference numerals as in Figure 1 designate the same or corresponding components as in Figure 1. Through the opening 5 in the wall 1 of a reactor pressure vessel there extends a tube 4 intended for an operating rod (not shown) linked to one of the control rods of the reactor. Around the tube 4, on the inside of the wall 1, there is arranged a CRD stub tube 6, which is welded to the wall 1 by a weld 7 and to the tube 4 by means of a weld 8. Close to the weld 8 in the CRD stub tube 6 a crack 9 has occurred, through which reactor water may leak out through the gap formed between the CRD stub tube 6 and the tube 4.

The inside of the wall 1 is coated with a stainless material. Also the CRD stub tube is of a stainless material.

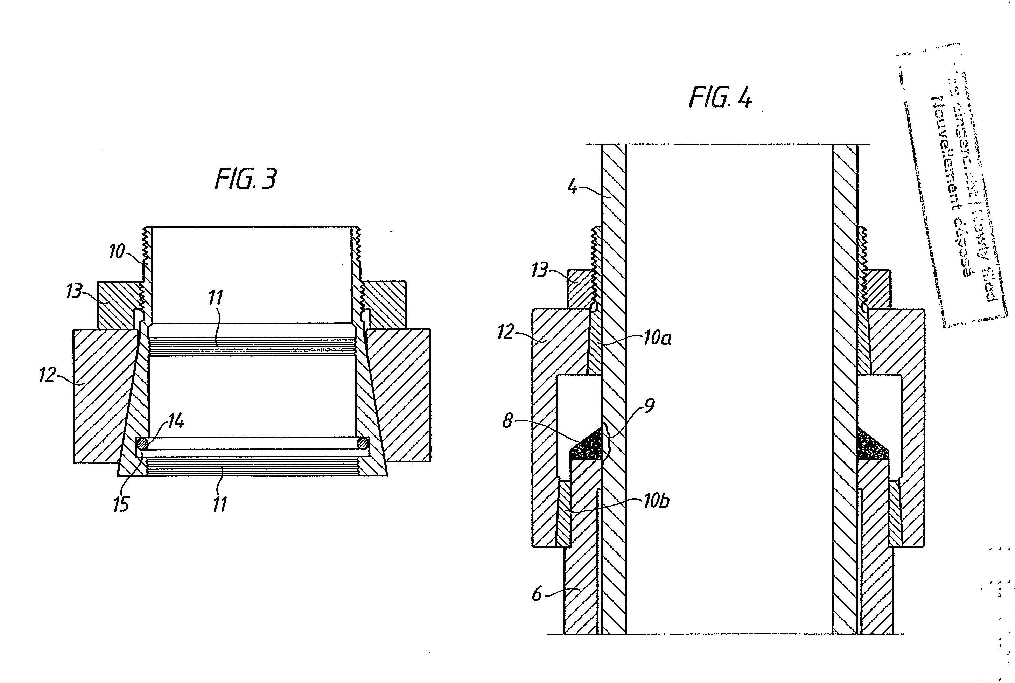

To bring about a satisfactory seal, the CRD stub tube 6 is machined such that its outer surface becomes completely even. To facilitate the mounting, the machining can be carried out to two different diameters of the CRD stub tube 6, the larger diameter being nearest to the wall 1. The inner sealing sleeve 10, which is to be of a soft metallic material, for example Inconel 600, is internally provided, at its ends, with a band of grooves 11 and ridges around the circumference the ridges projecting towards the center line of the sealing sleeve (see Figure 3). These ridges and grooves 11 make contact with the CRD stub tube 6 on each side of the crack 9. The sealing sleeve 10 is provided with an outer conical surface, over which may be fitted an outer sealing sleeve 12 with an inner conical surface. The sealing sleeve 12 is made of a hard metallic material, for example Inconel x-750, and deforms the inner soft sleeve 10 when being fitted over it, thus obtaining satisfactory sealing.

Figure 3 shows how the outer sealing sleeve 12 can be locked at the inner sleeve 10 by means of a locking nut 13. Figure 3 also shows how the grooves 11 can be arranged and that the sleeve has a larger diameter at the lower grooves 11 than at the upper ones.

To avoid the occurrence of an overpressure in the reactor water which may possibly be trapped in the space below the sleeve 10, between its upper end lower bands of grooves 11, a compressible volume is arranged at that spot, for example a gas-filled elastic tube, sealed at the ends, which may be bent as a piston ring 14 and be disposed in a slot 15 in the inner sealing sleeve 10.

In certain cases the crack 9 may be situated very inconveniently. Figure 4 shows such a situation. It is clear that it would be impossible in this case to employ a thin soft sealing sleeve 10 with the same diameter over its entire length. A solution to this problem is to divide the inner sleeve into two parts 10a and 10b, one, sealing sleeve 10a, having a smaller diameter and one, sealing sleeve 10b, having a larger diameter. Both sleeves 10a and 10b are provided with conical outer surfaces. The outer sealing sleeve 12 is made in one piece but with two separated conical inner surfaces, each one fitting the sleeves 10a and 10b, respectively.

When mounting the above device, two hydraulic jacks are needed, as mentioned above, one of these pushing the outer sleeve 12 downwards, the other pulling the inner sleeve 10a upwards. The sleeve 10b is applied on a somewhat turned-down region of the CRD stub tube 6 and is prevented from being pushed downwards by an edge.

## Claims

1. Sealing device for a tube penetrating the wall of a pressure vessel, preferably for control rod tubes (4) in nuclear reactors, to seal a possible leak inside the pressure vessel, with said tube (4) extending through an associated opening (5) in the wall (1) of the pressure vessel, with a stub tube (6) arranged around the tube (4) on the inside of the wall (1) and communicating with said opening (5), and with one end of said stub tube joined to the tube (4) by means of a weld (8), **characterized** in that the sealing device comprises at least one inner sealing sleeve (10) of a soft metallic material, adapted to be be fitted over the tube (4) and the stub tube (6) and having an outer conical surface, and an outer sealing sleeve (12) of a hard metallic material, adapted to be be arranged over said inner sealing sleeve (10) and having an inner conical surface, that on each side of a possible leak through the stub tube (6) or the tube (4) in the vicinity of said weld (8) there are formed special contact surfaces between the inner sealing sleeve (10) and the tube (4) or the stub tube (6), and that the outer sealing sleeve (12) is adapted to fit over the inner sealing sleeve (10) such, as to achieve a sealing deformation of said contact surfaces of the inner sealing sleeve (10).

2. Sealing device according to Claim 1, **characterized** in that the inner sealing sleeve (10) is provided with an outer locking nut (13) in order to lock the outer sealing sleeve (12).

3. Sealing device according to Claim 1 or 2, **characterized** in that said contact surfaces consist of a band of ridges and/or grooves (11) extending around the inner periphery of the inner sealing sleeve (10).

4. Sealing device according to any of the preceding Claims, **characterized** in that a slot (15) is provided in the inner sealing sleeve (10), in the area between the contact surfaces, around the inner periphery and that an elastically compressible ring (14) is arranged in said slot (15).

5. Sealing device according to any of Claims 1,2 or 3, **characterized** in that the inner sealing sleeve (10) is divided into two parts, one part (10a) having a smaller inner diameter and intended for sealing against the tube (4), and the other part (10b) having a larger diameter and intended for sealing against the stub tube (6), both parts having conical outer surfaces, and that the outer sealing sleeve (12) is provided with two inner conical surface areas, separated from each other and each arranged to fit one of said conical outer surfaces of the inner sealing sleeve (10a,10b) in order to provide a sealing contact of the inner sealing sleeves (10a,10b) against the tube (4) and the stub tube (6), respectively, when the outer sealing sleeve (12) is fitted over the inner one.

FIG.1

FIG.2

0 288 745

March 20, 1988
22 015 PE

FIG. 3

FIG. 4

0 288 745

March 20, 1988
22 915 RE